# EUROPÄISCHE PATENTSCHRIFT

(11) **EP 2 294 536 B1**
(45) Veröffentlichungstag und Bekanntmachung des Hinweises auf die Patenterteilung: **30.11.2011**
(21) Anmeldenummer: 09741786.9
(22) Anmeldetag: 25.03.2009
(51) Int. Cl.: G06K 19/077

(54) **RAUMGEBILDE MIT EINEM TRANSPONDER UND VERFAHREN ZUM ERZEUGEN DESSELBEN**
SPATIAL STRUCTURE WITH A TRANSPONDER AND METHOD FOR THE MANUFACTURE THEREOF
OBJET TRIDIMENSIONNEL AVEC UN TRANSPONDEUR ET PROCÉDÉ DE RÉALISATION ASSOCIÉ

(30) Priorität: 07.05.2008 DE 102008022711
(43) Veröffentlichungstag der Anmeldung: 16.03.2011
(73) Patentinhaber: SES RFID Solutions GmbH, 40489 Düsseldorf (DE)
(72) Erfinder: SCATTERGOOD, Martin, 40489 Düsseldorf (DE)
(74) Vertreter: Sparing Röhl Henseler Patentanwälte European Patent Attorneys
(86) Internationale Anmeldenummer: PCT/EP2009/002166
(87) Internationale Veröffentlichungsnummer: WO 2009/135567

(56) Entgegenhaltungen:
- DE-A1-102006 001 777
- US-A1- 2005 093 677
- US-B1- 6 891 110

## Beschreibung

Die Erfindung betrifft ein Raumgebilde mit einem Transponder und ein Verfahren zum Erzeugen desselben nach dem Oberbegriff des Anspruchs 1 bzw. 7.

Ein Transponder mit einem Chip und einer Spule als Antenne ermöglicht einen kontaktlosen Zugriff auf einen den Chip enthaltenden Speicher. In Karten angeordnete Transponder werden beispielsweise im Zusammenhang mit automatisierten Zutrittskontrollen, als Tickets, im Zusammenhang mit sicherheitsrelevanten Informationen als Pässe und Banking Cards, und im Zusammenhang mit der HerKunftskennzeichnung als Smart Labels und Etiketten verwendet.

Aus DE 10 2006 001 777 A1 ist ein Raumgebilde mit einem Transponder bekannt, bei dem eine Spule in einem flächigen thermoplastischen Material eingebettet ist, und die Enden der Spule über Lötkontakte mit einem Chip verbunden sind, der in einer Ausnehmung des flächigen thermoplastischen Materials angeordnet ist.

Nachteilig dabei ist, dass die Positionierung des Chips zur Anbringung der Lötkontakte mit der Ausrichtung der Enden der Spule zu einem erhöhten Aufwand zur Herstellung des Raumgebildes führt und mit zusätzlichen Kosten verbunden ist. Zudem ist zur Ausbildung eines dünnen flächigen Raumgebildes die Größe des Lötkontakts zu minimieren, um ein flexibles dünnes Raumgebilde zu schaffen.

Aufgabe der Erfindung ist es daher, ein Raumgebilde nach dem Oberbegriff des Anspruchs 1 bzw. ein Verfahren zur Erzeugung desselben nach dem Oberbegriff des Anspruchs 7 zu schaffen, bei dem ein Raumgebilde mit einem Transponder bei hoher Qualität kostengünstig mit geringem Aufwand und dünn ausgebildet herzustellen ist.

Diese Aufgabe wird durch die Merkmale des Anspruchs 1 bzw. 7 gelöst.

Hierdurch wird ein Raumgebilde mit einem Transponder geschaffen, bei dem der Transponder eine flächige bzw. eben ausgebildete Antenne und einen mit der Antenne verbundenen Chip aufweist, wobei die Antenne zumindest teilweise in einem flächigen thermoplastischen Material des Raumgebildes eingebettet ist. In dem thermoplastischen Material ist eine Ausnehmung für eine zumindest teilweise Aufnahme des Chips in dem thermoplastischen Material angeordnet. Es ist ein flächiges Modul vorgesehen, das ein elektrisch nicht leitendes, nicht mit dem thermoplastischen Material laminierbares Substrat umfasst, auf dem der Chip über einen elektrisch leitfähigen Film mit dem Substrat verbunden ist. Der elektrisch leitfähige Film bildet zwei Kontaktflächen zum Anschluss der Enden der Antenne mit dem Chip aus. Das flächenförmige bzw. flächige Modul ist mit den Kontaktflächen auf die Enden der Antenne ausgerichtet, so dass jede Kontaktfläche ein Ende der Antenne überdeckt. Durch das Modul werden großflächige Kontaktflächen für die Verbindung mit den Enden der Antenne bereitgestellt, die keine exakte Positionierung zwischen einer Anschlusstelle am Chip und einem Ende der Antenne erfordern. Zudem wird ein lötfreier Verbindungsprozess geschaffen. Die Verbindung erfolgt durch mechanischen Kontakt zwischen je einer Kontaktfläche und je einem Ende der Antenne, und es wird eine dauerhafte elektrische Verbindung erzielt. Das thermoplastische Material ist zusammen mit der aufgelegten Antenne und dem Modul zwischen je eine Decklage bzw. Overlay auf jede Seite des thermoplastischen Materials (heiß-)lamininert. Durch die Laminierung, d.h. Wärme- und Druckbeaufschlagung, wird die Antenne in dem thermoplastischen Material zumindest teilweise eingebettet, und es ergibt sich eine flache Struktur, bei der keine Elemente aufgrund der dünnen Ausbildung der Verbindung haptisch, d.h. fühlbar, erkennbar sind, selbst wenn ein Raumgebilde erzeugt wird, dessen Dicke nur ungefähr 300 µm beträgt. Sowohl die Antenne als auch der Chip mit den Verbindungen zur Antenne sind nicht "erfühlbar" in dem Raumgebilde. Die Verbindung über den elektrisch leitenden Film erzeugt kein hartes Element, wie beispielsweise einen Lötpunkt, der mit den Fingern in einem dünn ausgebildeten Raumgebilde ertastet werden kann, das aufgrund seiner geringen Dicke und der verwendeten Materialien auch flexibel ist. Das Substrat des Moduls wirkt während der Laminierung als Schutz sowohl für den Chip als auch die Verbindungsfläche zwischen den Enden der Antenne und den Kontaktflächen des Moduls, da das Substratmaterial nicht laminierbar mit dem thermoplastischen Material und der Decklage bzw. dem Overlay ist. Insbesondere werden die Kontaktflächen des Substrats geschützt. Durch die einmalige Laminierung, d.h. die einmalige Beaufschlagung mit Wärme und Druck, wird zudem die thermische und mechanische Belastung für die den Transponder bildenden Elemente und die entsprechenden elektrischen Verbindungen verringert und ein Verbund hoher Güte mit geringer Ausfallrate erzeugt. Das thermoplastische Material wird sandwichartig mit den beiden Decklagen verschmolzen.

Vorzugsweise weist der elektrisch leitfähige Film Silberleitpaste auf, da hierdurch eine hohe elektrische Leitfähigkeit auch dünner Filme erreicht wird. Selbst bei einer Ausbildung des Films mit einer Dicke von "nur" ungefähr 30 µm ist eine elektrische Verbindung zwischen dem Chip und einem Ende der Spule möglich.

Zur Verhinderung der Laminierung des Substrats des Moduls mit dem thermoplastischen Material und zum Schutz des Chips mit den Kontaktflächen besteht das Substrat des Moduls vorzugsweise aus PET (Polyethylenterephtalat), PI (Polyimid), PV (PVDF, Polyvinylidenfluorid) oder einer Kombination hiervon.

Für eine einfache Laminierung mit den beiden Decklagen bzw. den beiden Overlays weist das thermoplastische Material PVC (Polyvinylchlorid), PETG (modifiziertes PET), PC (Polycarbonat) oder eine Kombination hiervon auf. Die genannten Materialien sind kostengünstig und in Form einer Folie herstellbar.

Als Material für die Decklage ist vorzugsweise Teslin, PVC, PETG, PC oder dergleichen verwendbar. Vorzugsweise weist eine Decklage eine Dicke zwischen ungefähr 0,03mm und ungefähr 0,25mm auf, wobei es wünschenswert ist, dass die Decklage bzw. das Overlay noch dünner ausgestaltet ist. Besonders wünschenswert sind Decklagen im Bereich zwischen ungefähr 0,04mm und 0,05mm.

Sofern als thermoplastisches Material PVC verwendet wird, so wird vorzugsweise auch für die Decklage bzw. das Overlay PVC verwendet.

Es hat sich herausgestellt, dass kartenförmige, dünne Raumgebilde eine hohe Akzeptanz finden. Das Raumgebilde, d.h. im Wesentlichen das thermoplastische Material, ist daher vorzugsweise kartenförmig ausgebildet und weist eine Dicke von zwischen 0,2mm bis 0,4mm, insbesondere 0,3mm, auf. Das flexible kartenförmige Raumgebilde hat aufgrund der ausgebildeten großen Kontaktflächen mittels Silberleitpaste keine "erfühlbaren" Elemente, wie beispielsweise Lötkontakte.

Weitere Ausgestaltungen der Erfindung sind den Unteransprüchen und der nachfolgenden Beschreibung zu entnehmen.

Die Erfindung wird nachstehend anhand des in den beigefügten Abbildungen dargestellten Ausführungsbeispiels näher erläutert.
Fig. 1a zeigt schematisch ein Modul mit einem Substrat, einem Chip und Kontaktflächen zur Verbindung des Chips in einer perspektivischen Ansicht;
Fig. 1b zeigt schematisch das Modul von Fig. 1 a in einer Seitenansicht;
Fig. 2 zeigt schematisch die Anordnung einer Antenne auf einem thermoplastischen Material in einer perspektivischen Ansicht;
Fig. 3 zeigt schematisch die zusätzliche Anordnung des in Fig. 1 dargestellten Moduls in der Anordnung gemäß Fig. 2 in einer perspektivischen Ansicht;
Fig. 4 zeigt schematisch die Laminierung mit je einer Decklage von oben und unten der in Fig. 3 dargestellten Anordnung in einer perspektivischen Ansicht.

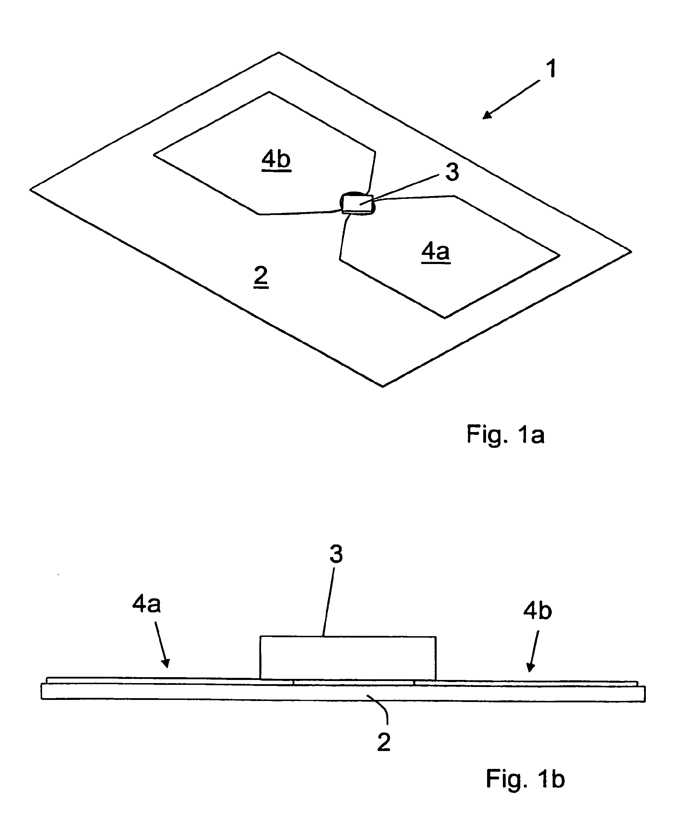

Fig. 1 a zeigt schematisch in einer perspektivischen Ansicht ein flächig ausgebildetes Modul 1 mit einem nicht leitenden Substrat 2 und einem Chip 3, der auf dem Substrat 2 angeordnet ist. Der Chip 3 ist mit dem Substrat 2 verbunden über einen elektrisch leitfähigen Film, der auch adhäsive Eigenschaften aufweist. In einer Ausführungsform der Erfindung kann als leitfähiger Film eine Silberpaste (silver glue) verwendet werden, die gleichzeitig als Klebstoff zur mechanischen Verbindung des Chips 3 mit dem Substrat 2 dient. Der Chip 3 ist über den leitfähigen Film mit dem Substrat 2 mechanisch verbunden. Es kann auch vorgesehen sein, dass der Chip 3 mittels ACF (anisotropic conductive film) unterhalb des Chips 3 zwischen diesem und dem Substrat 2 aufgeklebt ist unabhängig von dem leitfähigen Film.

Auf dem Substrat 2 sind Kontaktflächen 4a, 4b gebildet durch den leitfähigen Film. Die Kontaktflächen 4a, 4b sind die Anschlussstellen bzw. Verbindungsstellen für den Chip 3. Die Anschlussstellen des Chips 3 werden quasi durch die Kontaktflächen 4a, 4b nach "außen" geführt. Es wird über die großflächigen Kontaktflächen 4a, 4b eine vereinfachte Kontaktierung des Chips 3 geschaffen. Zur Ausbildung eines Transponders aus Chip 3 und einer Antenne 6 ist die Antenne 6 des Transponders mit je einem Ende mit einer der Kontaktflächen 4a, 4b verbindbar.

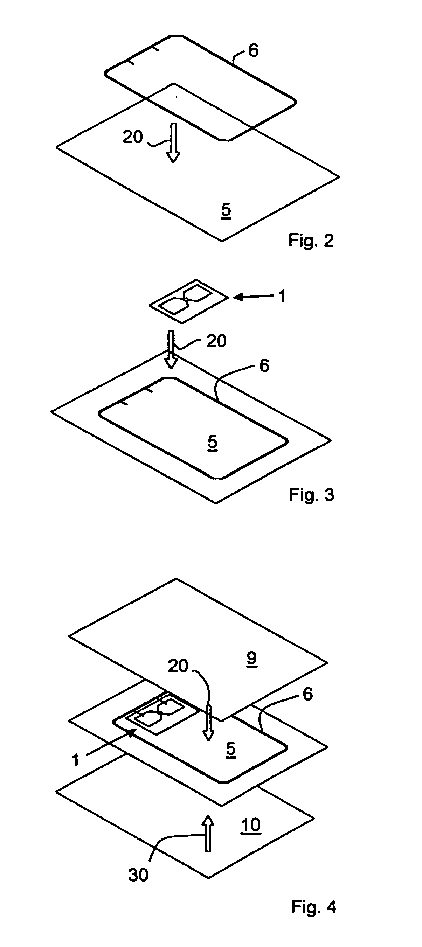

Die Antenne 6 kann als einlagige Spule ausgebildet sein, die radial benachbarte Windungen aufweist. In dem in Fig. 2, 3 und 4 dargestellten Ausführungsbeispiel ist die Antenne 6 als eine solche radial benachbarte Windungen aufweisende, einlagige Spule ausgebildet.

Die Antenne kann auch als geätzte Antenne vorliegen. Ebenso ist es möglich, dass die Antenne als gedruckte Leiterbahn vorliegt. Die Antenne kann auch durch Elektroplattierung erzeugt worden sein. Bei den vorgenannten Möglichkeiten kann es sein, dass die Antenne auf einem elektrisch nicht leitenden Substrat aufgebracht ist. Für die Zwecke der Erfindung kann auch eine Antenne auf einem elektrisch nicht leitenden Substrat verwendet werden.

Für die Ausbildung eines dünnen flexiblen Raumgebildes weist das Substrat 2 in einem Ausführungsbeispiel der Erfindung eine Dicke von ungefähr 50 µm auf. Die Dicke des Substrats 2 mit aufgebrachtem leitfähigen Film beträgt ungefähr 80 µm, und die Dicke des Chips 3 ungefähr 200 µm, so dass sich eine maximale Dicke des Moduls 1 von ungefähr 250 µm ergibt. Zur Verdeutlichung der Dickenverhältnisse ist das in Fig. 1a gezeigte Modul 1 in Fig. 1b in einer Seitenansicht gezeigt.

Während der Chip 3 eine räumliche Ausdehnung in der Ebene des Moduls 1 von ungefähr 1.600 µm x 1.600 µm aufweist, weisen die Kontaktflächen 4a, 4b eine Fläche von mindestens ungefähr 9.700 µm x 9.700 µm auf. Die Kontaktflächen 4a, 4b stellen eine großfläche Anschlussmöglichkeit für eine Kontaktierung des Chips 3 dar, wie beispielsweise zum Anschluss der Enden der Antenne, die zur Ausbildung eines Transponders in einem flächigen Raumgebilde benötigt wird.

Fig. 2 zeigt eine perspektivische Ansicht eines thermoplastischen Materials 5, das flächig ausgestaltet ist. Die in dem gezeigten Ausführungsbeispiel als Spule ausgestaltete Antenne 6 umfasst einen in Windungen, insbesondere 5 bis 8 Windungen, gewickelten Metalldraht. Die Windungen der Spule sind radial benachbart. Die Spule ist rechteckförmig mit abgerundeten Ecken ausgebildet. Die Spule weist zwei Enden 7, 8 auf. Die Enden 7, 8 sind nach innen in den durch die Spule umrandeten rechteckigen Bereich geführt. In anderen Ausführungsbeispielen kann die Spule auch kreisförmig sein oder eine andere geschlossene ebene Form aufweisen.

Zur Ausbildung der Spule kann als Metalldraht ein, insbesondere mit Lack, isolierter Metalldraht verwendet werden. Die Isolierung des Metalldrahts kann beim Wickeln der Windungen zumindest teilweise mit einem Lösungsmittel in Kontakt gebracht und teilweise angelöst werden. Beim Ausbilden der Windungen kann die Isolierung benachbarter Windungen zumindest teilweise in Kontakt miteinander gebracht werden, wobei der Draht benachbarter Windungen nicht in Kontakt zueinander kommt, und dann das Lösungsmittel verdampft werden. Durch das teilweise Anlösen der Isolierung haftet die Isolierung der benachbarten Windungen der Spule an den angelösten und wieder erhärteten Isolierungen aneinander, so dass eine flächige einlagige Spule gebildet werden kann, deren benachbarte Windungen mit ihrer Isolierung aneinander ausgebildet sind. In einem anderen Ausführungsbeispiel kann es auch vorgesehen sein, dass die Windungen der Spule sich nicht berühren. Sofern sich die Windungen in der Isolierung berühren, wird hierdurch eine Spule mit einem geringen Umfangsrand gebildet.

Gemäß dem in Fig. 2 dargestellten Ausführungsbeispiel wird die Spule zunächst auf dem thermoplastischen Material 5 abgelegt, was durch den mit dem Bezugszeichen 20 versehenen Pfeil verdeutlicht wird.

Danach wird das Modul 1 auf das thermoplastische Material 5 und die darauf liegende Antenne 6, die hier als Spule ausgebildet ist, abgelegt, was in Fig. 3 durch den mit dem Bezugszeichen 20 versehenen Pfeil verdeutlicht wird. Das Modul 1 wird so ausgerichtet, dass die Kontaktflächen 4a, 4b den Enden 7, 8 der Spule zugewandt sind und diese überdecken. Das in Fig. 1 dargestellte Modul 1 wird dabei in Bezug auf Fig. 1 um 180° in Bezug auf eine Achse parallel zur Ebene des Substrats 2 gedreht, damit je eine der Kontaktflächen 4a, 4b ein Ende 7, 8 der Spule berühren kann.

Damit der Chip 3 nicht als Erhöhung in dem flächigen Raumgebilde ertastbar ist, ist der Chip 3 in einer Ausnehmung des thermoplastischen Materials 5 angeordnet bzw. wird in die Ausnehmung geführt.

Die Enden 7, 8 der Spule berühren die Kontaktflächen 4a, 4b des Moduls 1 aufgrund ihrer Größe auf jeden Fall, unabhängig von gewissen Fertigungstoleranzen oder Verschiebungen eines Endes 7, 8 der Spule, so dass eine Verbindung zwischen dem Chip 3 und der Spule besteht, wenn das Modul 1 auf dem thermoplastischen Material 5 und der darauf liegenden Spule abgelegt wird. Es kommt zu einer mechanischen Verbindung zwischen je einer der Kontaktflächen 4a, 4b und je einem Ende 7, 8 der Spule, wobei eine dauerhafte elektrische Verbindung erzielt wird.

Fig. 4 zeigt die gemäß Fig. 3 auf dem thermoplastischen Material 5 abgelegte Spule und das Modul 1. Die Kontaktflächen 4a , 4b des Moduls 1 sind über den Enden 7, 8 der Spule angeordnet.

Über die beiden großen Flächen des thermoplastischen Materials 5 wird, wie in Fig. 4 schematisch gezeigt, je eine Decklage 9, 10 laminiert. Durch die mit den Bezugszeichen 20 bzw. 30 versehenen Pfeile wird die Anordnung zwischen den Decklagen 9, 10 und dem thermoplastischen Material verdeutlicht. Die Decklage 9 befindet sich oberhalb von dem dargestellten thermoplastischem Material 5. Die Decklage 10 befindet sich unterhalb des in Fig. 4 dargestellten thermoplastischen Materials 5. Für die Laminierung weist das thermoplastische Material 5 ein Polyvinylchlorid, PETG, Polycarbonat oder eine Kombination hiervon auf, bzw. besteht aus einem derartigen thermoplastischen Material. Die Decklage 9, 10 weist Teslin, PVC, PETG, PC oder eine Kombination hiervon auf, bzw. besteht aus einem derartigen thermoplastischen Material.

Zur Ausübung einer Schutzfunktion während des Laminierens weist das Substrat 2 PET, PI, PV oder eine Kombination hiervon auf, bzw. besteht aus einem derartigen Material bzw. einer Materialkombination.

Durch das Laminieren wird die als Spule ausgestaltete Antenne 6 in das thermoplastische Material 5 hineingedrückt und in diesem zumindest teilweise eingebettet. Die Spule ist in der im Wesentlichen planen Fläche des thermoplastischen Materials 5 angeordnet. Der Chip 3 ist in der Ausnehmung in dem thermoplastischen Material 5 angeordnet und bildet auch keine Erhöhung. Die Ausnehmung in dem thermoplastischen Material 5 kann als durch das thermoplastische Material 5 durchgehende Ausstanzung ausgebildet sein, da durch die Laminierung das ausgestanzte "Loch" verschlossen wird.

Mit der Laminierung wird das Modul 1 mit seinem Substrat 2 und dem Chip 3 mit den elektrisch leitfähigen Kontaktflächen 4a, 4b über den Enden 7, 8 der Spule fixiert, und es wird eine dauerhafte elektrische Verbindung der Spule mit dem Chip 3 erreicht, die flexibel ausgestaltet ist. Das thermoplastische Material 5 ist zusammen mit dem Modul 1 und der Spule sandwichartig zwischen den Decklagen 9, 10 bzw. Overlays anordnet.

In einem Ausführungsbeispiel kann auch vorgesehen sein, dass die Spule zuerst durch Strombeaufschlagung in dem thermoplastischen Material 5 eingebettet wird. Dazu wird die gemäß Fig. 2 auf das thermoplastische Material 5 abgelegte Spule mit Strom beaufschlagt, so dass sich die Spule aufgrund ihres elektrischen Widerstands erwärmt. Die lokale Erwärmung der Spule über den in der Spule fließenden Strom führt zu einem Erweichen des thermoplastischen Materials 1 und einem Einsinken der Spule in das Material 5 aufgrund des Eigengewichts der Spule. Es kann auch vorgesehen sein, dass die erwärmte Spule mit Druck, beispielsweise über einen Stempel, beaufschlagt wird, um eine zusätzliche Kraft in Richtung des erweichten thermoplastischen Materials 5 auszuüben, die das Einsinken der Spule unterstützt. Insbesondere kann der Stempel an die Form der Spule angepasst sein, so dass nur die Wicklungen der Spule mit Druck beaufschlagt werden.

Durch die Strombeaufschlagung kann die Spule auf vorzugsweise 80°C bis 120°C für wenige Sekunden erwärmt werden. Eine solche kurze Strombeaufschlagung reicht aufgrund der lokalen Erwärmung aus, das thermoplastische Material 5 zu erweichen und die Spule einsinken zu lassen. Die mit der Spule während der Strombeaufschlagung maximal erreichte Temperatur kann gerade so gewählt werden, dass das thermoplastische Material 5 erweicht, aber keine Temperatur erreicht wird, die zu einem Durchbrennen des Metalldrahts führt. Als thermoplastisches Material 5 kann beispielsweise Polyvinylchlorid verwendet werden, das schon bei etwa 80°C erweicht.

Um flache Raumgebilde, insbesondere Karten, herzustellen, kann das flächige thermoplastische Material 5 eine Dicke zwischen 0,2mm bis 0,4mm aufweisen. Der Metalldraht kann einen Kupferdraht umfassen, dessen Dicke an die Dicke des thermoplastischen Materials 5 angepasst ist, so dass er dünner als dieses ist, um in dem thermoplastischen Material 5 zumindest teilweise, vorzugsweise ganz, eingebettet zu sein. Der Metalldraht kann eine Dicke von weniger als 0,25mm aufweisen, ferner bevorzugt eine Dicke unter 0,1 mm, insbesondere bevorzugt eine Dicke zwischen 0,02mm bis 0,08mm.

## Patentansprüche

1. Raumgebilde mit einem Transponder, der eine flächig ausgebildete Antenne (6) und einen mit der Antenne (6) verbundenen Chip (3) aufweist, wobei die Antenne (6) zumindest teilweise in einem flächigen thermoplastischen Material (5) des Raumgebildes eingebettet ist, und eine Ausnehmung in dem thermoplastischen Material (5) zur teilweisen Aufnahme des Chips (3) vorgesehen ist, **dadurch gekennzeichnet, dass** ein flächiges Modul (1) mit einem nicht leitenden, nicht mit dem thermoplastischen Material laminierbaren Substrat (2) vorgesehen ist, mit dem der Chip (3) über einen elektrisch leitfähigen Film verbunden ist, dass mit dem Film Kontaktflächen (4a, 4b) zum Anschluss der Enden (7, 8) der Antenne (6) mit dem Chip (3) auf dem Modul (1) ausgestaltet sind, und dass das thermoplastische Material (5) zusammen mit dem Modul (1), dessen Kontaktflächen (4a, 4b) auf die Enden (7, 8) der Antenne (6) ausgerichtet sind, und der Antenne (6) zwischen zwei Decklagen (9, 10) sandwichartig laminiert ist.

2. Raumgebilde nach Anspruch 1, **dadurch gekennzeichnet, dass** der elektrisch leitfähige Film Silberleitpaste aufweist.

3. Raumgebilde nach Anspruch 1 oder 2, **dadurch gekennzeichnet, dass** das Substrat (2) des Moduls (1) aus PET, PI, PV oder einer Kombination hiervon besteht.

4. Raumgebilde nach einem der Ansprüche 1 bis 3, **dadurch gekennzeichnet, dass** das thermoplastische Material (5) Polyvinylchlorid, PETG, Polycarbonat oder eine Kombination hiervon aufweist.

5. Raumgebilde nach einem der Ansprüche 1 bis 4, **dadurch gekennzeichnet, dass** das Material für die Decklage (9, 10) Teslin, PVC, PETG, PC oder eine Kombination hiervon aufweist.

6. Raumgebilde nach einem der Ansprüche 1 bis 5, **dadurch gekennzeichnet, dass** das thermoplastische Material (5) kartenförmig ist und eine Dicke von zwischen 0,2mm bis 0,4mm, insbesondere 0,3mm, aufweist.

7. Verfahren zum Erzeugen eines Raumgebildes mit einem Transponder, der eine flächig ausgebildete Antenne (6) und einen mit der Antenne (6) verbundenen Chip (3) aufweist, wobei die Antenne (6) zumindest teilweise in einem flächigen thermoplastischen Material (5) des Raumgebildes eingebettet wird, **dadurch gekennzeichnet, dass** die Antenne (6) auf das thermoplastische Material (5) gelegt wird, und ein flächiges Modul (1) verwendet wird, das ein elektrisch nicht leitendes, nicht mit dem thermoplastischen Material (5) laminierbares Substrat (2) aufweist, mit dem durch einen elektrisch leitfähigen Film der Chip (3) verbunden ist, wobei der elektrisch leitfähige Film auf dem Substrat (2) Kontaktflächen (4a, 4b) ausbildet zur Verbindung der Enden (7, 8) der Antenne (6) mit dem Chip (3), und dass das Modul (1) ausgerichtet wird mit den Kontaktflächen (4a, 4b) über den Enden (7, 8) der Antenne (6) und auf die Antenne (6) und das thermoplastische Material (5) gelegt wird, und das thermoplastische Material (5) sandwichartig zwischen zwei Decklagen (9, 10) mit der aufliegenden Antenne (6) und dem aufliegenden Modul (1) laminiert wird.

8. Verfahren nach Anspruch 7, **dadurch gekennzeichnet, dass** als elektrisch leitfähiger Film Silberleitpaste verwendet wird.

9. Verfahren nach Anspruch 7 oder 8, **dadurch gekennzeichnet, dass** als Substrat (2) des Moduls (1) PET, PI, PV oder eine Kombination hiervon verwendet wird.

10. Verfahren nach einem der Ansprüche 7 bis 9, **dadurch gekennzeichnet, dass** als thermoplastisches Material (5) Polyvinylchlorid, PETG, Polycarbonat oder eine Kombination hiervon verwendet wird.

11. Verfahren nach einem der Ansprüche 7 bis 10, **dadurch gekennzeichnet, dass** als Material für die Decklage (9, 10) Teslin, PVC, PETG, PC oder eine Kombination hiervon verwendet wird.

12. Verfahren nach einem der Ansprüche 7 bis 11, **dadurch gekennzeichnet, dass** als thermoplastisches Material (5) eine kartenförmige Folie mit einer Dicke von zwischen 0,1mm bis 0,4mm, insbesondere zwischen 0,15mm bis 0,35mm, insbesondere bevorzugt ungefähr 0,250mm, verwendet wird.

## Claims

1. Three-dimensional construct, having a transponder which has an antenna (6) of flat construction and, connected to the antenna (6), a chip (3), the antenna (6) being embedded at least partially in a flat thermoplastic material (5) of the three dimensional construct, and a void being provided in the thermoplastic material (5) for partially accommodating the chip (3), **characterised in that** a flat module (1) is provided with a non-conducting substrate (2) which is not laminated with the thermoplastic material and with which the chip (3) is connected by way of an electrically conductive film, **in that** from the film there are formed contact surfaces (4a, 4b) for connecting the ends (7, 8) of the antenna (6) to the chip (3) on the module (1), and **in that** the thermoplastic material (5) - together with the module (1), the contact surfaces (4a, 4b) of which are oriented with the ends (7, 8) of the antenna (6), and the antenna (6) - is laminated in sandwich-like form between two covering layers (9, 10).

2. Three-dimensional construct according to claim 1, **characterised in that** the electrically conductive film comprises conductive silver paste.

3. Three-dimensional construct according to claim 1 or 2, **characterised in that** the substrate (2) of the module (1) is made from PET, PI, PV or a combination thereof.

4. Three-dimensional construct according to one of claims 1 to 3, **characterised in that** the thermoplastic material (5) comprises polyvinyl chloride, PETG, polycarbonate or a combination thereof.

5. Three-dimensional construct according to one of claims 1 to 4, **characterised in that** the material for the covering layer (9, 10) comprises Teslin, PVC, PETG, PC or a combination thereof.

6. Three-dimensional construct according to one of claims 1 to 5, **characterised in that** the thermoplastic material (5) is card-shaped and has a thickness of from 0.2 mm to 0.4 mm, especially 0.3 mm.

7. Method of producing a three-dimensional construct having a transponder which has an antenna (6) of flat construction and, connected to the antenna (6), a chip (3), the antenna (6) being embedded at least partially in a flat thermoplastic material (5) of the three-dimensional construct, **characterised in that** the antenna (6) is placed on the thermoplastic material (5), and a flat module (1) is used, which has an electrically non-conducting substrate (2) which is not laminated with the thermoplastic material (5) and with which the chip (3) is connected by means of an electrically conductive film, the electrically conductive film forming, on the substrate (2), contact surfaces (4a, 4b) for connecting the ends (7, 8) of the antenna (6) to the chip (3), and **in that** the module (1) is oriented with the contact surfaces (4a, 4b) over the ends (7, 8) of the antenna (6) and is placed on the antenna (6) and the thermoplastic material (5), and the thermoplastic material (5) is, together with the antenna (6) placed thereon and the module (1) placed thereon, laminated in sandwich-like form between two covering layers (9, 10).

8. Method according to claim 7, **characterised in that** conductive silver paste is used as the electrically conductive film.

9. Method according to claim 7 or 8, **characterised in that** PET, PI, PV or a combination thereof is used as the substrate (2) of the module (1).

10. Method according to one of claims 7 to 9, **characterised in that** polyvinyl chloride, PETG, polycarbonate or a combination thereof is used as the thermoplastic material (5).

11. Method according to one of claims 7 to 10, **characterised in that** Teslin, PVC, PETG, PC or a combination thereof is used as the material for the covering layer (9, 10).

12. Method according to one of claims 7 to 11, **characterised in that** a card-shaped foil having a thickness of from 0.1 mm to 0.4 mm, especially from 0.15 mm to 0.35 mm, more especially approximately 0.250 mm, is used as the thermoplastic material (5).

## Revendications

1. Structure spatiale équipée d'un transpondeur comportant une antenne (6) de forme plane et une puce (3) reliée à l'antenne (6), l'antenne (6) étant intégrée au moins partiellement dans un matériau plan thermoplastique (5) de la structure spatiale, et un évidemment étant prévu dans le matériau thermoplastique (5) pour loger partiellement la puce (3), **caractérisée en ce qu'**elle comporte un module plan (1) pourvu d'un substrat (2) non conducteur, agencé de façon à ne pas être laminé avec le matériau thermoplastique, la puce (3) étant reliée audit module par le biais d'un film électro-conducteur; **en ce que** sont réalisées avec le film sur le module (1) des surfaces de contact (4a, 4b) destinées à raccorder les extrémités (7, 8) de l'antenne (6) avec la puce (3), et **en ce que** le matériau thermoplastique (5) conjointement avec le module (1), dont les surfaces de contact (4a, 4b) sont orientées vers les extrémités (7, 8) de l'antenne (6), et avec l'antenne (6), est laminé entre deux couches de recouvrement (9, 10) à la façon d'un sandwich.

2. Structure spatiale selon la revendication 1, **caractérisée en ce que** le film électro-conducteur comporte de la pâte d'argent conductrice.

3. Structure spatiale selon la revendication 1 ou 2, **caractérisée en ce que** le substrat (2) du module (1) est composé de PET, de PI, de PV ou d'une combinaison de ces éléments.

4. Structure spatiale selon l'une des revendications 1 à 3, **caractérisée en ce que** le matériau thermoplastique (5) comporte du chlorure de polyvinyle, du PETG, du polycarbonate ou une combinaison de ces éléments.

5. Structure spatiale selon l'une des revendications 1 à 4, **caractérisée en ce que** le matériau pour réaliser les couches de recouvrement (9, 10) comporte du Teslin, du PVC, du PETG, du PC ou une combinaison de ces éléments.

6. Structure spatiale selon l'une des revendications 1 à 5, **caractérisée en ce que** le matériau thermoplastique (5) a la forme d'une carte et possède une épaisseur comprise entre 0,2 mm et 0,4 mm, en particulier de 0,3 mm.

7. Procédé pour réaliser une structure spatiale équipée d'un transpondeur comportant une antenne plate (6) et une puce (3) reliée à l'antenne (6), l'antenne (6) étant intégrée au moins partiellement dans un matériau plan thermoplastique (5) de la structure spatiale, **caractérisé en ce que**, l'antenne (6) étant placée sur le matériau thermoplastique (5), on réalise un module plan (1) comportant un substrat (2) non conducteur, agencé de façon à ne pas être laminé avec le matériau thermoplastique (5), ledit module étant relié à la puce (3) par le biais d'un film électro-conducteur, le film électro-conducteur formant des surfaces de contact (4a, 4b) sur le substrat (2) destinées à raccorder les extrémités (7, 8) de l'antenne (6) à la puce (3), et **en ce que** le module (1) est agencé de façon à positionner les surfaces de contact (4a, 4b) au-dessus des extrémités (7, 8) de l'antenne (6) et est positionné sur l'antenne (6) et sur le matériau thermoplastique (5) et l'antenne (6) et le module (1) sont positionnés sur le matériau thermoplastique (5), celui-ci étant laminé entre deux couches de recouvrement (9, 10).

8. Procédé selon la revendication 7, **caractérisé en ce que** l'on utilise de la pâte d'argent conductrice en tant que film électro-conducteur.

9. Procédé selon la revendication 7 ou 8, **caractérisé en ce que** l'on utilise du PET, du PI, du PV ou une combinaison de ces éléments en tant que substrat (2) du module (1).

10. Procédé selon l'une des revendications 7 à 9, **caractérisé en ce que** l'on utilise du chlorure de polyvinyle, du PETG, du polycarbonate ou une combinaison de ces éléments en tant que matériau thermoplastique (5).

11. Procédé selon l'une des revendications 7 à 10, **caractérisé en ce que** l'on utilise du Teslin, du PVC, du PETG, du PC ou une combinaison de ces éléments en tant que matériau pour réaliser les couches de recouvrement (9, 10).

12. Procédé selon l'une des revendications 7 à 11, **caractérisé en ce que** l'on utilise, en tant que matériau thermoplastique (5), une feuille en forme de carte ayant une épaisseur comprise entre 0,1 mm et 0,4 mm, en particulier entre 0,15 mm et 0,35 mm, de préférence d'environ 0,250 mm.
